# EUROPÄISCHE PATENTSCHRIFT

(11) **EP 2 520 157 B1**
(45) Veröffentlichungstag und Bekanntmachung des Hinweises auf die Patenterteilung: **18.07.2018**
(21) Anmeldenummer: 12002715.6
(22) Anmeldetag: 19.04.2012
(51) Int. Cl.: A01F 15/07

(54) **Ballenwickler**
Bale wrapper
Enrubanneuse

(30) Priorität: 04.05.2011 DE 102011100502
(43) Veröffentlichungstag der Anmeldung: 07.11.2012
(73) Patentinhaber: Maschinenfabrik Bernard Krone GmbH, 48480 Spelle (DE)
(72) Erfinder: Schulz, Stephan, 49525 Lengerich (DE); Borker, Martin, 49716 Meppen (DE)

(56) Entgegenhaltungen:
- EP-A1- 2 050 330
- WO-A1-99/04613
- WO-A1-03/039240
- WO-A1-2010/151110

## Beschreibung

Die Erfindung bezieht sich auf eine Vorrichtung zum Umhüllen oder Verpacken von Erntegutballen mit Wickelmaterial, insbesondere Folie, wobei diese von zumindest einer an einem Wickelarm gehalterten Folienrolle durch Umlauf um den auf einem Wickeltisch liegenden Ballen an diesen abgegeben wird.

Aus dem Stand der Technik sind diverse Vorrichtungen zum Umhüllen oder Verpacken von landwirtschaftlichen Erntegutballen mit einer Wickeleinheit und einer dieser zugeordneten Wickeltischeinrichtung bekannt, bei der der zu umhüllende Erntegutballen, beispielsweise ein Rundballen, mit Hilfe einer Wickeleinheit mit Wickelmaterial umhüllt wird. Es gibt sie als gezogene Ballenwickler, welche an einen Schlepper angehängt und von diesen angetrieben auf dem Feld von Ballen zu Ballen fahren um diese aufzunehmen und einzuwickeln, oder aber auch stationär betrieben werden, wobei sie mit zu umwickelnden Ballen beladen werden. Weiterhin sind Ballenwickler als Maschinenkombination mit einer Ballenpresse, insbesondere einer Rundballenpresse bekannt. Bei diesen Kombinationen wird der soeben gepresste Ballen direkt an den Wickler übergeben, von diesem eingewickelt und dann auf dem Feld abgelegt.

Je nach Größe des zu umwickelnden Erntegutballens ist es hierbei notwendig, das Wickelmaterial, beispielsweise eine Folienbahn, so auszurichten, dass es mittig entlang des Erntegutballens geführt werden kann. Ansonsten ergibt sich eine ungleichmäßige oder schnell verrutschende Umwicklung des Ballens. Um das Wickelmaterial zentral auf die Höhe der Mitte des Erntegutballens zu positionieren, bzw. um unterschiedlich breite Folienbahnen (Folienrollen) an die Größe des Erntegutballens anzupassen, sind unter anderem Ausführungen bekannt, bei denen die Wickelmaterialrollen mit ihren Halterungen an den Wickelarmen in verschiedenen Positionen manuell verstellt und arretiert werden können. Dieses ist von Hand zu bewerkstelligen und aufgrund des häufig großen Gewichtes des Wickelmaterials schwer durchzuführen.

Aus der EP 2 050 330 A1 ist beispielsweise eine komfortablere Lösung mit Stellantrieben zur Höhenanpassung des Wickelmaterials auf die Ballenmitte bekannt. Dieser Lösung ist jedoch ebenso wie der handbetätigten Lösung als nachteilig anzusehen, dass das Gewicht des gesamten, um den Ballen umlaufenden Wickelarms dadurch erheblich erhöht wird, wodurch der Wickelarmantrieb und die Drehlagerung des Wickelarms erheblichen zusätzlichen Belastungen ausgesetzt sind. Insbesondere auch während des Transports des Ballenwicklers mit hohen Geschwindigkeiten wirkt das zusätzliche Gewicht besonders verschleißfördernd.

Eine weitere Lösung zur Höhenanpassung des Wickelmaterials zum Ballen wird durch die EP 1 502 493 A1 offenbart. Durch einen höhenverstellbaren Wickeltisch wird der Ballen hierbei zum Wickelmaterial angepasst und so der Wickelarm nicht zusätzlich belastet. Diese Lösung bedingt allerdings einen erheblichen Mehraufwand bezüglich Grundrahmenauslegung und Wickeltischlagerung, insbesondere weil die Tischverstellung auch den schweren Ballen tragen muss.

Aus der WO 03/039240 A1 ist eine kombinierte Ballenpress- und Wickelmaschine für Rundballen bekannt geworden, bei der die Ballenpresskammer aus einem unteren und einem oberen Abschnitt gebildet ist. Zur Durchführung des Wickelprozesses, bei dem der fertiggestellte Ballen beispielsweise mit einer Folie umhüllt wird, erfolgt ein Anheben des oberen Abschnittes der Ballenpresskammer, so dass ein Teil des fertiggestellten Ballens von außerhalb der Ballenkammer zugänglich wird. In diesem Bereich wird nun durch Abziehen einer Folienbahn von einer Vorratsrolle mittels Wickeleinrichtung der Rundballen mit einer Folie umhüllt. Diese Wickeleinrichtung kann dazu aus einer Ruhestellung, in der sich diese am Rahmen der Ballenpresse abstützt in eine Betriebsstellung überführt werden, in der die Wickeleinrichtung um den Rundballen geführt werden kann. In Bezug auf weitere Betriebs- oder Außerbetriebsstellung beispielsweise zur Verbesserung im Ablauf des Zusammenraffens und des Abschneidens der Folie am Ende des Wickelvorganges sind in dieser Druckschrift keinerlei Hinweise enthalten.

Aus der WO 99/04613 A1 ist eine weitere kombinierte Ballenpress- und Wickelmaschine bekannt geworden. Der Erfindung liegt die Aufgabe zugrunde, die beschriebenen Nachteile zu vermeiden und einen verbesserten Ballenwickler zum Verpacken von Erntegutballen zu schaffen, der flexibel an die Größe des zu verpackenden Erntegutballens anpassbar ist.

Gelöst wird diese Aufgabe durch eine Vorrichtung gemäß Anspruch 1.

Ein Ballenwickler gemäß der Erfindung weist einen Wickelarm auf, der insgesamt mit den an ihm angeordneten Wickelmaterial- Halte- und Abrolleinrichtungen im Abstand zum Wickeltisch höhenverstellbar ist. Dabei ist es ohne Bedeutung, ob der Ballen nur von einer, von zwei oder noch mehr Wickelmaterialrollen gleichzeitig mit Wickelmaterial, insbesondere Folie umwickelt wird. Somit kann das Gewicht des drehangetriebenen Wickelarms vorteilhaft möglichst gering gehalten werden. Durch die Höhenverstellung des gesamten Wickelarms werden in Verbindung mit weiteren erfindungsgemäßen Merkmalen des Ballenwicklers besondere neue Vorteile der Maschine erzielt. So ist insbesondere vorgesehen, den Wickelarm in eine untere Außerbetriebsstellung abzusenken, in der die Halte- und Abrolleinrichtung und damit der gesamte Wickelarm direkt auf Seitenträgern des Wicklergrundrahmens aufsetzt und somit fixiert sind. Vorteilhaft bietet es sich an, die Auflagestellen des Grundrahmens mit Gummiauflagen oder ähnlichem zu versehen. Durch diese Fixierung des Wickelarmes wird seine Drehlagerung vom Gewicht des Wickelarmes entlastet, was sich insbesondere bei schneller Straßenfahrt sehr vorteilhaft auf den Verschleiß und auf die konstruktive Auslegung auswirkt, da die dabei auftretenden hohen dynamischen Kräfte erheblich reduziert bzw. ganz vermieden werden. Die untere Parkposition des Wickelarms bringt jedoch nicht nur als Transportposition Vorteile, sondern auch im Ablauf des Wickelvorgangs. So ermöglicht der erfindungsgemäße Ballenwickler bereits zum Ende des Einwickelvorgangs den Wickelarm abzusenken, wodurch die Wickelmaterialbahn einen wesentlich günstigeren Verlauf für das anschließende Raffen und Abtrennen der Bahn einnimmt. Besonders vorteilhaft wird die Steuerung der Wickelarmhöhenverstellung von der Steuer- und Regeleinrichtung des Ballenwicklers übernommen und automatisch ausgeführt. Als Grundlage dafür können der Steuerung durch den Bediener vorgegebene und/oder durch Sensoren ermittelte Parameter, wie beispielsweise der tatsächliche Ballendurchmesser dienen.
Ein weiteres neues Erfindungsmerkmal des Ballenwicklers ist die Möglichkeit, den Wickelarm in eine obere Außerbetriebsstellung verlagern zu können. Diese Stellung mit maximalem Abstand des Wickelarms und dessen Drehlagerung zum Wickeltisch liegt noch oberhalb der Stellung, die notwendig ist um, einen Ballen mit den größtmöglichen mit dem Wickelarm noch zu umwickelnden Abmessungen verpacken zu können. Diese oberste Stellung ist unter anderem besonders vorteilhaft, wenn der Wickeltisch des Ballenwicklers beispielsweise mit einem Lader mit Ballen beladen werden soll. Durch den zusätzlichen Freiraum über dem Wickeltisch wird das Be- und Entladen erheblich vereinfacht.
Bei der Kombination des Ballenwicklers mit einer Ballenpresse, was bevorzugt in der Kombination mit Rundballenpressen ausgeführt wird, ermöglicht die zweite, obere Außerbetriebsstellung beim Pressen von Ballen, die jedoch nicht verpackt werden sollen, ein direktes Durchladen und Ablegen der Ballen auf dem Feld, wobei diese Ballen dann größer sein können als die maximal noch zu verpackenden Ballen. Beispielhaft ist es heutzutage allein aufgrund des Ballengewichtes bei Silageballen nicht üblich Rundballen mit einem Durchmesser über 1,8 Meter zu verpacken, wobei leichte Strohballen, welche ohnehin nicht verpackt werden, auch schon mit Durchmessern von 2 Metern oder mehr gepresst werden. Um erhöhten konstruktiven Aufwand zu vermeiden und um beim Straßentransport mit der Maschine bezüglich der Transportabmessungen, insbesondere bezüglich Breite und Höhe im Rahmen der gesetzlichen Bestimmungen zu bleiben, sind mit diesen Durchmessern auch bereits Grenzen erreicht, weshalb man sich bei der Auslegung der Wickeleinheiten auch auf diese Größen beschränkt.
Durch die neuen Merkmale des erfindungsgemäßen Ballenwicklers wird beides jetzt jedoch wirtschaftlich mit einer Press- Wickelkombination, bei der zumindest eine Wickelmaterialrolle umlaufend um den zu verpackenden Ballen an einem oberhalb des Ballens aufgehängten Wickelarm umläuft, ermöglicht.
In einer besonders komfortablen Ausführungsform eines erfindungsgemäßen Ballenwicklers werden die vorteilhaften Verlagerungen des Wickelarms relativ zum Wickeltisch vollautomatisch ohne zusätzliche Bedienschritte des Bedieners von der Maschinensteuerung in Abhängigkeit von ohnehin notwendigen Betriebsparametern wie Ballengröße oder Betriebsart veranlasst. Bei einer kombinierten Maschine würde der Wickelarm in der Betriebsart "Pressen ohne Wickeln" bis zu einem bestimmten Ballendurchmesser in die vorteilhafte untere fixierte Parkposition verlagert und erst bei größeren Ballen, wenn der Freiraum es erfordert, automatisch in die obere Endlage verfahren. Ebenso ist es denkbar, den Wickelarm in Abhängigkeit des Ballendurchmessers während des Wickelvorgangs in der Höhe zu verlagern, um die Überlappungen des Wickelmaterials auf dem Ballen zu optimieren.
Eine zusätzliche automatische Komfortfunktion der Steuerung ist bei detektiertem Rollenende zum Wechseln der Wickelmaterialrollen denkbar. Wird hierzu die untere erste Außerbetriebsstellung angefahren, erleichtert das dem Bediener erheblich den Wechsel der schweren Rollen.
Die Verstelleinrichtung zur Höhenverlagerung der Wickeleinrichtung kann in verschiedensten Varianten ausgestaltet werden. Linearführungen, Schwenkeinrichtungen um einen Drehpunkt oder lenkergeführte Aufhängungen in der Art einer 3-Punkt- Aufhängung sind hier nur beispielhaft erwähnt. Letztere bietet sich jedoch vorteilhaft an, da sie eine wartungsfreie und zumindest nahezu lineare Führung darstellt, welche mit geringem konstruktiven Aufwand ausführbar und mit verschiedensten Stellantrieben hydraulisch oder elektrisch gezielt verstellbar sind.

Weitere vorteilhafte Ausgestaltungen der Erfindung ergeben sich aus den Unteransprüchen und den Figuren der Zeichnung. Es zeigt:
- Fig. 1:: ein Ausführungsbeispiel eines Ballenwicklers gemäß der Erfindung in Kombination mit einer Rundballenpresse, wobei sich der Wickelarm in der unteren Außerbetriebsstellung befindet;
- Fig. 2:: die Press- Wickelkombination aus Fig. 1, wobei sich der Wickelarm in der oberen Außerbetriebsstellung befindet.

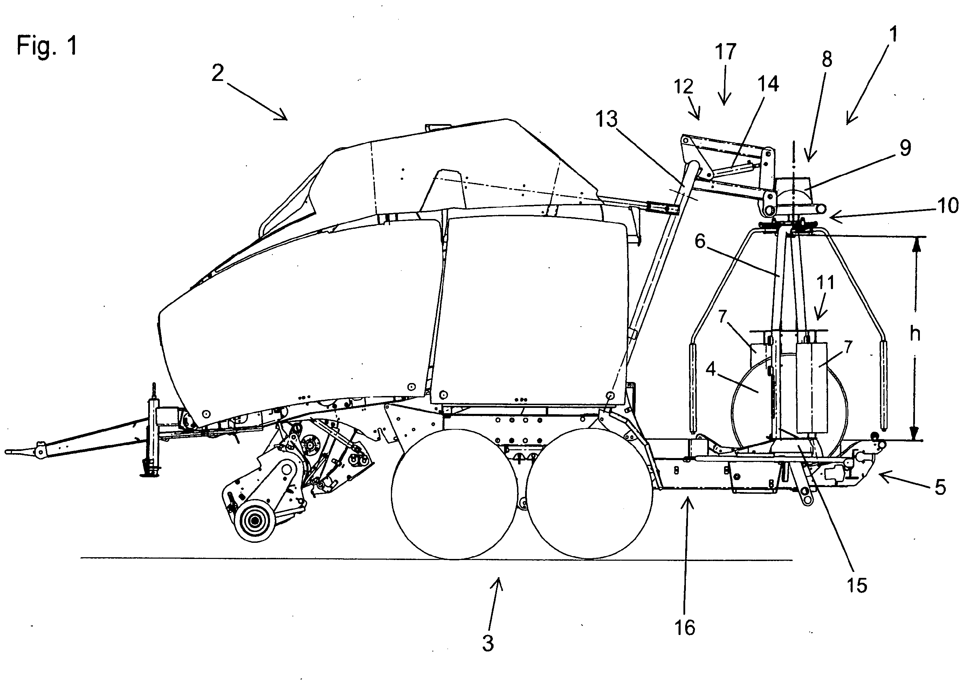

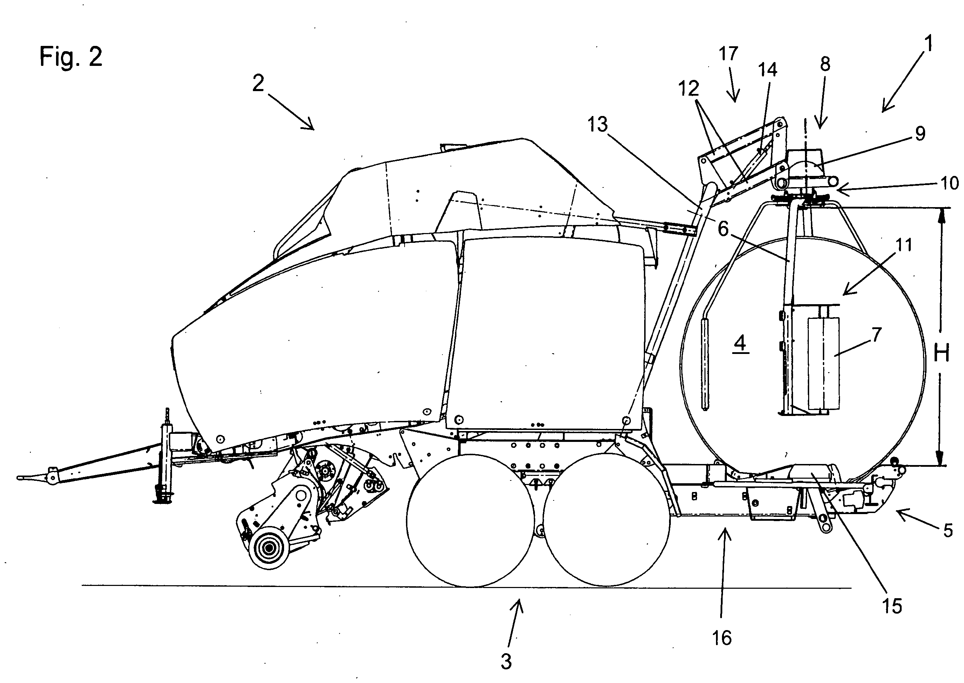

Ein erfindungsgemäßer Ballenwickler 1 wird in Fig. 1 in Kombination mit einer Rundballenpresse 2 mit einem variablen Pressraum als Press- Wickelkombination 3 gezeigt. Ein gepresster Rundballen 4 wird hierbei direkt von der Rundballenpresse 2 an den Wickeltisch 5 des Ballenwicklers 1 übergeben. Vom Wickeltisch 5 aufgenommen, wird der Ballen 4 von diesem um seine Längsmittelachse in Drehung versetzt, wobei dann gleichzeitig von den an dem Wickelarm 6 angeordneten Folienrollen 7 durch Umkreisen des Ballens 4 Folienbahnen derart auf diesen übertragen werden, dass er nach einer vorgegebenen Anzahl von Umwicklungen vollständig in Folie verpackt ist. Damit die Folienbahnen möglichst zentrisch um den Ballen 4 geführt werden, wodurch eine optimale Verpackung erzielt wird, sind die Wickelmaterialrollen 7 in ihrem relativen Abstand zum Wickeltisch 5 an variable Ballendurchmesser anpassbar. Dies geschieht im Ausführungsbeispiel durch die Höhenverstellung der gesamten Wickeleinheit 8. Die gesamte Wickeleinheit 8, bestehend aus dem Drehantrieb 9 und der Drehlagerung 10 des Wickelarms 6, dem Wickelarm 6 mit den Wickelmaterialhaltern 11 und den Wickelmaterialrollen 7 ist durch ein Lenkerparallelogramm 12 an einen Rahmenausleger 13 der Press- Wickelkombination 3 gehaltert und mittels eines Hydraulikzylinders 14 als Stellantrieb derart antreibbar, dass sich die Wickeleinheit 8 annähernd linear vertikal verlagert.
In Fig. 1 ist die Wickeleinheit 8 in der untersten Stellung dargestellt. Diese unterste Stellung stellt eine erste Außerbetriebsstellung mit einem minimalen Durchgangsmaß h zwischen Wickelarm 6 und Wickeltisch 5 dar und ist gleichzeitig die Parkstellung der Wickeleinheit 8 beispielsweise für den Straßentransport, da sich der Wickelarm 6 bzw. die Wickelmaterialhalter 11 bei dieser Stellung auf rahmenfeste Auflagen 15 zum Grundrahmen 16 des Ballenwicklers 1 hin abstützen. Vorteilhaft bestehen die Auflagen 15 zumindest im Kontaktbereich mit der Wickeleinheit 8 aus Gummi, um so eine besonders gute Fixierung zu bieten. In dieser Position ruht das gesamte Gewicht der Wickeleinheit 8 auf dem Grundrahmen 16, wodurch das Lenkerparallelogramm 12 und insbesondere auch die ansonsten stark belastete Drehlagerung 10 entlastet sind. Dies wirkt sich besonders verschleißmindernd aus und erlaubt außerdem eine leichtere und damit auch preisgünstigere Auslegung der Bauteile.
Die Festlegung des Wickelarms 6 in der Parkposition wirkt sich auch positiv auf die Betriebssicherheit der Wickeleinheit 8 aus, weil dadurch Bewegungen und Schwingungen zwischen den Folienrollen 7 und den am Grundrahmen 16 angeordneten, nicht dargestellten Folienklemmeinheiten vermieden werden, wodurch die Folie sicher gehalten für den nächsten Wickelstart bereitsteht.
Eine aus der ersten unteren Außerbetriebsstellung leicht angehobene unterste Betriebsstellung der Wickeleinheit 8 erlaubt bei dem Ballenwickler 1 des Ausführungsbeispiels bereits das Verpacken eines Ballens 4 ab einem Durchmesser von ca. 1 Meter, so wie er in Fig. 1 auf dem Wickeltisch 5 dargestellt ist.
Da in der Praxis nur Erntegutballen mit Folie verpackt werden, welche als Silagefutter Verwendung finden, ist der Durchmesser der zu verpackenden Rundballen auf etwa 1,7 bis 1,8 Meter begrenzt. Größere Silageballen währen aufgrund des hohen Gewichtes des Silage Ernteguts kaum noch zu handhaben, weshalb die Auslegung der Wickeleinheiten aus wirtschaftlichen Gründen in der Regel auf diese Maximalgrößen begrenzt wird.
Die Rundballenpresse 2 der Press- Wickelkombination 3 des Ausführungsbeispiels ist jedoch besonders vorteilhaft auch zum Pressen größerer Ballen 4 geeignet, wie es bei Strohballen, welche jedoch nicht verpackt werden, sehr wohl erwünscht ist. Damit diese Großballen auch über den Wickeltisch 5 entladen und auf dem Feld abgelegt werden können, weist der erfindungsgemäße Ballenwickler 1 eine zweite Außerbetriebsstellung auf, wobei der in Fig.2 dargestellte Abstand H einen maximalen Durchgang zwischen Wickelarm 6 und Wickeltisch 5 erlaubt. Der in Fig. 2 gezeigte Rundballen 4 entspricht der maximal mit der Rundballenpresse 2 zu pressenden Abmessung und kann bei der Press- Wickelkombination 3 des Ausführungsbeispiels bis zu 2,1 Meter im Durchmesser betragen. Ein Ballen 4 dieser Größe kann jedoch von dem Wickelarm 6 und den Folienrollen 7 nicht mehr Umkreist und somit auch nicht verpackt werden.
Die erfinderische obere Außerbetriebsstellung der Wickeleinheit 8 ermöglicht jedoch das Transportieren und das Durchladen von Ballen 4 dieser Größe.
Durch die Stelleinrichtung 17 können verschiedene Betriebsstellungen zwischen der ersten Außerbetriebsstellung und der zweiten Außerbetriebsstellung als Wickelpositionen für entsprechende Ballendurchmesser angefahren werden. Dieses ist in einer einfachen Ausführung manuell in Stufen durch den Bediener veranlasst denkbar, oder aber in einer besonders komfortablen Ausführung auch vollautomatisch stufenlos durch eine Steuerung in Abhängigkeit von ermittelten Parametern ausführbar.
Die Erfindung bezieht sich selbstverständlich nicht nur auf einen Ballenwickler 1 in Kombination mit einer Ballenpresse und auch nicht nur auf einen Ballenwickler 1 zum Verpacken von Rundballen. Ballenwickler 1 als Einzelmaschine, in gezogener, stationärer wie auch Selbstfahrerausführung fallen ebenfalls unter den Schutzumfang.

## Patentansprüche

1. Ballenwickler (1) zum Umhüllen oder Verpacken von insbesondere landwirtschaftlichen Erntegutballen mit einem Grundrahmen (16), einem den Erntegutballen aufnehmenden am Grundrahmen (16) gelagerten Wickeltisch (5) und einem oberhalb eines vom Wickeltisch (5) aufgenommenen Ballens (4) an einer Drehlagerung (10) angeordneten, zumindest eine Folienrolle (7) aufnehmenden Wickelarm (6), welcher zur Anpassung an unterschiedliche Ballengrößen zumindest im vertikalen Abstand relativ zum Wickeltisch (5) verlagerbar ist, wobei eine Steuereinrichtung des Ballenwicklers (1) die Verlagerung des Wickelarms (6) in Abhängigkeit von vorgegebenen oder durch Sensoren ermittelten Parametern veranlasst und die Steuereinrichtung automatisch im Ablauf des Wickelvorgangs eines Erntegutballens (4) den Wickelarm (6) im Vertikalabstand zum Wickeltisch (5) verlagert, **dadurch gekennzeichnet, dass** der Wickelarm (6) zumindest eine erste Außerbetriebsstellung aufweist, in der die Gesamtmasse des Wickelarms (6) bei gleichzeitiger Entlastung der Drehlagerung (10) direkt auf dem Grundrahmen (16) ruht und die erste Außerbetriebsstellung des Wickelarms (6) eine Stellung unterhalb einer untersten Betriebsstellung mit geringstem Vertikalabstand (h) zwischen dem Wickelarm (6) und dem Wickeltisch (5) entspricht und wobei die Steuervorrichtung zum Ende des Wickelvorgangs den Wickelarm (6) zumindest in die unterste Betriebsstellung oder in die erste Außerbetriebsstellung verlagert.

2. Ballenwickler (1) nach Anspruch 1, **dadurch gekennzeichnet, dass** die Steuereinrichtung in Abhängigkeit der Breite der Folienrolle (7) eine Höhenverstellung des Wickelarms (6) veranlasst.

3. Ballenwickler (1) nach Anspruch 1 oder 2, **dadurch gekennzeichnet, dass** die Steuereinrichtung in Abhängigkeit der vorgegebenen oder der tatsächlichen vertikalen Erstreckung des auf dem Wickeltisch (5) befindlichen Erntegutballens (4) eine Höhenverstellung des Wickelarms (6) veranlasst.

4. Ballenwickler (1) nach zumindest einem der vorhergehenden Ansprüche, **dadurch gekennzeichnet, dass** der Wickelarm (6) in eine zweite Außerbetriebsstellung oberhalb einer obersten Betriebsstellung mit maximalem Vertikalabstand (H) zwischen Wickelarm (6) und Wickeltisch (5) verlagerbar ist.

5. Ballenwickler (1) nach zumindest einem der vorhergehenden Ansprüche, **dadurch gekennzeichnet, dass** der Ballenwickler (1) zur Höhenverlagerung des Wickelarms (6) eine Stelleinrichtung (17) mit einem Lenkerparallelogramm (12) umfasst.

6. Ballenwickler (1) nach zumindest einem der vorhergehenden Ansprüche, **dadurch gekennzeichnet, dass** der Ballenwickler (1) Bestandteil einer landwirtschaftlichen Press- Wickelkombination (3) für Erntegutballen, insbesondere Rundballen (4) ist.

## Claims

1. Bale wrapper (1) for wrapping or packing in particular agricultural crop bales, comprising a base frame (16), a wrapping table (5) mounted on the base frame (16) for receiving the crop bales, and a wrapping arm (6) which is arranged on a pivot bearing (10) above a bale (4) received by the wrapping table (5), receives at least one roll of film (7), and can be moved at least at a vertical spacing relative to the wrapping table (5) in order to adapt to different bale sizes, a control device of the bale wrapper (1) causing the wrapping arm (6) to move on the basis of predetermined parameters or parameters detected by sensors, and the control device automatically displacing the wrapping arm (6) at a vertical spacing relative to the wrapping table (5) during the process of wrapping a crop bale (4), **characterised in that** the wrapping arm (6) has at least one first inoperative position in which the entire mass of the wrapping arm (6) rests directly on the base frame (16) when the strain on the pivot bearing (10) is simultaneously relieved, and the first inoperative position of the wrapping arm (6) corresponds to a position below a lowest operative position having a minimum vertical spacing (h) between the wrapping arm (6) and the wrapping table (5), and the control device moving the wrapping arm (6) at least into the lowest operative position or into the first inoperative position at the end of the wrapping process.

2. Bale wrapper (1) according to claim 1, **characterised in that** the control device causes the height of the wrapping arm (6) to be adjusted on the basis of the width of the roll of film (7).

3. Bale wrapper (1) according to either claim 1 or claim 2, **characterised in that** the control device causes the height of the wrapping arm (6) to be adjusted on the basis of the predetermined or actual vertical extension of the crop bale (4) on the wrapping table (5).

4. Bale wrapper (1) according to at least one of the preceding claims, **characterised in that** the wrapping arm (6) can be moved into a second inoperative position above a first uppermost operative position having a maximum vertical spacing (H) between the wrapping arm (6) and the wrapping table (5).

5. Bale wrapper (1) according to at least one of the preceding claims, **characterised in that** the bale wrapper (1) comprises an adjusting device (17) having a parallelogram linkage (12) in order to adjust the height of the wrapping arm (6).

6. Bale wrapper (1) according to at least one of the preceding claims, **characterised in that** the bale wrapper (1) is a component of an agricultural baler/wrapper combination (3) for crop bales, in particular round bales (4).

## Revendications

1. Enrubanneuse (1) permettant d'envelopper ou d'emballer des balles de produits de récolte en particulier agricole comprenant un châssis de base (16), une table enrubanneuse (5) recevant les balles de produits de récolte montée sur le châssis de base (16) et un bras enrubanneur (6) recevant au moins un rouleau de film (7), monté sur un palier rotatif (10), au-dessus d'une balle (4) reçue par la table enrubanneuse (5), et qui, pour permettre une adaptation à différentes dimensions de balles peut être déplacé au moins pour modifier sa distance verticale par rapport à la table enrubanneuse (5), un dispositif de commande de l'enrubanneuse (1) permettant le déplacement du bras enrubanneur (6) en fonction de paramètres prédéfinis ou détectés par des capteurs, et le dispositif de commande déplaçant automatiquement le bras enrubanneur (6) à distance verticale de la table enrubanneuse (5) au cours du processus d'enrubannage d'une balle de produits de récolte (4),
**caractérisée en ce que**
le bras enrubanneur (6) a au moins une première position hors service dans laquelle la masse totale du bras enrubanneur (6) s'applique directement sur le châssis de base (16) avec décharge simultanée du palier rotatif (10) et la première position hors service du bras enrubanneur (6) correspond à une position située au-dessous de la position de fonctionnement la plus basse avec la plus faible distance verticale (h) entre le bras enrubanneur (6) et la table enrubanneuse (5), et, à la fin du processus d'enrubannage le dispositif de commande déplace le bras enrubanneur (6) au moins dans la position de fonctionnement la plus basse ou dans la première position hors service.

2. Enrubanneuse (1) conforme à la revendication 1,
**caractérisée en ce que**
le dispositif de commande permet un réglage en hauteur du bras enrubanneur (6) en fonction de la largeur du rouleau de film (7).

3. Enbubanneuse (1) conforme à la revendication 1 ou 2,
**caractérisée en ce que**
le dispositif de commande permet un réglage en hauteur du bras enrubanneur (6) en fonction de l'extension verticale prédéfinie ou réelle de la balle de produits de récolte (4) située sur la table enrubanneuse (5).

4. Enrubanneuse (1) conforme à au moins l'une des revendications précédentes,
**caractérisée en ce que**
le bras enrubanneur (6) peut être déplacé dans une seconde position hors service située au dessous de la position de fonctionnement la plus haute avec une distance verticale maximum (H) entre le bras enrubanneur (6) et la table d'enrubannage (5).

5. Enrubanneuse (1) conforme à au moins l'une des revendications précédentes,
**caractérisée en ce que**
pour permettre un réglage en hauteur du bras enrubanneur (6) l'enrubanneuse (1) comporte un dispositif de réglage (17) avec un parallélogramme déformable(12).

6. Enrubanneuse (1) conforme à au moins l'une des revendications précédentes,
**caractérisée en ce qu'**
elle est un élément d'un combiné presse-enrubanneuse agricole (3) de balles de produits de récolte en particulier de balles rondes (4).
